# EUROPEAN PATENT SPECIFICATION

(11) **EP 0 330 361 B1**
(45) Date of publication and mention of the grant of the patent: **21.04.1993**
(21) Application number: 89301382.1
(22) Date of filing: 14.02.1989
(51) Int. Cl.: G09G 1/28, G09G 3/20

(54) **Color display device**
Farbanzeigegerät
Dispositif d'affichage à couleurs

(30) Priority: 16.02.1988 US 156061
(43) Date of publication of application: 30.08.1989
(73) Proprietor: GENERAL ELECTRIC COMPANY, Schenectady, NY 12345 (US)
(72) Inventor: Stewart, Wilber Clarence, Hightstown New Jersey (US); Pica, Albert Paul, East Windsor New Jersey (US); Roach, William Ronald, Rocky Hill New Jersey (US)
(74) Representative: Pratt, Richard Wilson

(56) References cited:
- EP-A- 0 096 856
- EP-A- 0 249 326
- GB-A- 2 180 979
- IBM TECHNICAL DISCLOSURE BULLETIN, vol. 25, no. 10, March 1983, page 4951, New York, US; J.A. HUPCEY et al.: "Attribute bit assignment and processing for color display"
- JOURNAL OF IMAGING TECHNOLOGY, vol. 12, no. 2, April 1986, pages 126-130; P.G. ENGELDRUM: "Four color reproduction theory for dot formed imaging systems"

## Description

This invention relates generally to color display devices and particularly to an arrangement for the cells within the pixels of a color alpha-numeric and graphic display device.

In color display devices, each pixel of the display includes cells which individually emit the red, green and blue primary colors of light. The pixels are arranged in rows substantially parallel to a horizontal axis and in columns substantially parallel to a vertical axis. For alpha-numeric and graphic display devices, the pixels are comprised of bilevel cells, whereby actuated cells provide light and unactuated cells provide no light. The desired alpha-numeric and graphic displays are produced by selectively actuating the cells required to produce the desired display. Displays having one of the three primary colors are produced simply by actuating the desired color cells within the pixels needed to produce the desired pattern. For example, when a green display is desired, the green cells within the pixels needed to produce the desired pattern are actuated, while the other cells within the pixels remain unactuated. White is produced by simultaneously actuating all three color cells within each pixel, and black, or nearly black, is produced when none of the cells within a pixel are actuated. Other colors are produced by simultaneously actuating the cells required to produce such color. For example, magenta is produced by simultaneously actuating the red and blue cells.

Alpha-numeric and graphic display devices require horizontal, vertical and diagonal straight lines. Accordingly, the pixels are arranged horizontally and vertically in rows and columns, in an effort to produce such lines. However, when each pixel is composed of three cells, the cells are typically arranged in a triangular pattern; all three cells cannot be vertically or horizontally aligned without shifting the cells on a line-by-line or column-by-column basis, and straight lines cannot be produced. A linear cell arrangement applying said shifting is known from GB-A-2 180 979. It has been found that the appearance of alpha-numeric and graphic displays can be improved by adding a fourth cell to each pixel, to provide diagonal symmetry to the pixels. However, problems nevertheless arise, because the color of the additional cell upsets the color balance of the pixel. Additionally, all four cells within a pixel cannot be horizontally or vertically aligned; therefore, the production of some colors of displays requires the selection of unaligned cells within the pixels, and straight lines extending in all directions cannot be produced. Because of these difficulties, there is a need for an arrangement of the cells within the pixels which yields alpha-numeric characters and line segments which are the easiest to read and which are the most pleasing to a viewer situated at a normal or standard viewing distance. An acceptable alpha-numeric display device must meet several criteria for the straight and diagonal line segments which form the characters and graphic portions of the display. When viewed from the standard viewing distance, upwardly and downwardly sloping diagonal lines should have the same general overall appearance. Also, horizontal and vertical lines should appear straight. These criteria must be met for all colors of alpha-numeric displays. The present invention is directed to arrangements of the cells within the pixels of a display device which meet these criteria.

In accordance with the invention, a display device having an array of multi-cell pixels arranged along horizontal and vertical axes includes an arrangement for the cells comprised in the pixels, for producing straight vertical and horizontal alpha-numeric lines and for producing upwardly and downwardly sloping alpha-numeric lines having the same overall appearance. Each of the pixels includes a brightest cell, a bright cell, a medium cell and a darkest cell. The brightest cell and the bright cell are aligned substantially parallel to one of the axes, the bright cell and the darkest cell are diagonally aligned with respect to the axes.

In the drawings:
FIGURE 1 depicts a preferred embodiment of the inventive device.
FIGURES 2a through 2h show various arrangements of cells within the pixels of a display device which are consistent with the present invention.
FIGURE 3 shows the undesirable appearance of the letters X and K resulting from a cell arrangement different from that of the present invention.
FIGURE 4 shows the desirable appearance of the letters X and K when a first arrangement of pixel cells consistent with the invention is utilized.
FIGURE 5 shows the desirable appearance of the letters X and K when another arrangement of cells consistent with the invention is utilized.

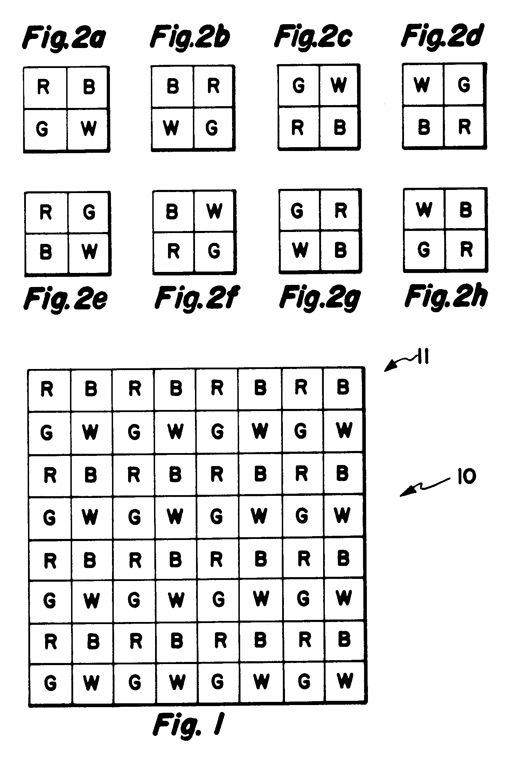

FIGURE 1 shows a portion of a display device 10 incorporating the invention. The display device 10 includes a plurality of pixels 11 which are arranged horizontally in rows and vertically in columns. Each of the pixels 11 includes four cells individually identified as R, G, B and W, which denote the colors transmitted by the individual cells. Thus, the R cell transmits red light, the B cell blue light, the G cell green light and the W cell white light. The R,G, B, W cells are arranged in a repetitive pattern in accordance with their luminosities. Accordingly, the white cells are the brightest, the green cells bright, the red cells medium and the blue cells darkest. The red and blue cells are arranged in an alternating repetitive pattern to form the first (top) row of the display. The green and white cells are arranged in an alternating repetitive pattern to form the second row of the display. Accordingly, the first (left) column of the display device contains alternate red and green cells, and the second column contains alternate blue and white cells. The bright (G) and darkest (B) cells are diagonally aligned, as are the brightest (W) and medium (R). This pattern is repeated across the entire surface of the display device 10. This arrangement of the cells within the pixels 11 creates the advantages of all diagonally sloping lines having a very similar appearance and of all horizontal and vertical lines being straight line segments for all graphic or alpha-numeric displays.

FIGURES 2a through 2h show cell arrangements which are consistent with the above criteria for optimum alpha-numeric displays. In FIGURE 2a, the four R, B, G, W cells are arranged as shown in FIGURE 1, with the green and white cells horizontally adjacent and the green and blue cells diagonally aligned. FIGURE 2b is similar to FIGURE 2a, in that the green and white cells are aligned in the second horizontal row. However, the white and blue cells are in the first column, rather than the second column. FIGURE 2c shows the bright (green) and brightest (white) cells horizontally aligned in the top row and the medium (red) and dark (blue) cells aligned in the second row. FIGURE 2d is similar to FIGURE 2c, except that the white and blue cells are in the first column, rather than the second column.

FIGURES 2e to 2h show the cell arrangements when the display 10 of FIGURE 1 is rotated 90°. In FIGURE 2e, the brightest (W) and bright (G) cells are vertically aligned in the right column, and the bright (G) and darkest (B) cells again are diagonally aligned. FIGURE 2f is similar to FIGURE 2e, but the B and W cells are in the top row, rather than the bottom row. FIGURE 2g has the G and W cells vertically aligned with the W cell in the second row. FIGURE 2h is similar to FIGURE 2g, but the W cell is in the top row and the G cell is in the second row. In all the cell arrangements of FIGURES 2a through 2h, the brightest (W) cells and the bright (G) cells are either horizontally or vertically aligned, while the bright (G) and darkest (B) cells are diagonally aligned.

There are several advantages to the cell arrangements shown in FIGURES 2a through 2h. First, when white is to be displayed, all four cells are actuated, and a very pure white display is obtained because of the white contribution of the white cell. Additionally, all upwardly sloping and downwardly sloping diagonal lines which are portions of alpha-numeric or graphic displays are similar in appearance. Also, all horizontal and vertical lines are straight and void of any staggering of the brightest and bright cells.

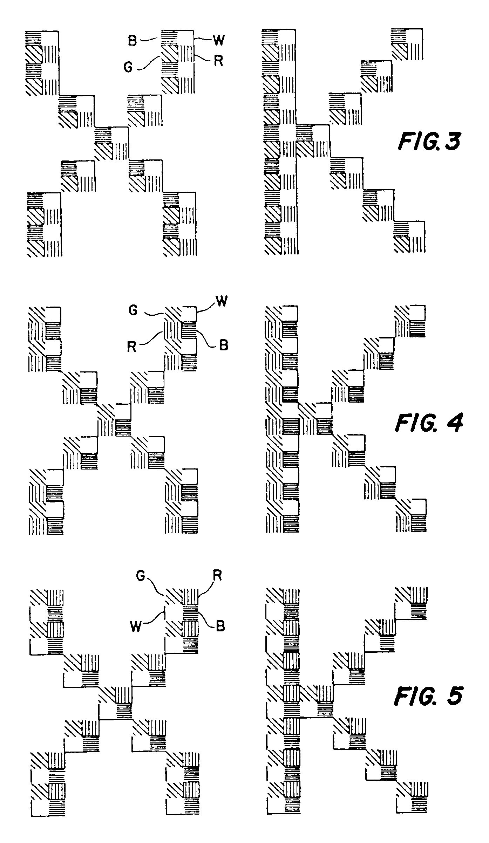

The advantages of the arrangements shown in FIGURES 2a through 2h can be appreciated from FIGURE 3, which does not include any of the inventive cell arrangements. In FIGURE 3, the green and white cells are diagonally arranged, as are the red and blue cells. Accordingly, the vertical lines, such as the small portions of the letter X and the vertical of the letter K, are staggered because of the diagonal alignment of the brightest and the bright cells. Also, the diagonals which slope downwardly from the left to the right have an appearance which is substantially different from that of the diagonals which slope upwardly from the left to the right. Accordingly, the diagonal disposition of the brightest (W) cells and the bright (G) cells is disadvantageous, because it causes jagged appearing vertical and horizontal lines and dissimilar diagonal lines.

FIGURE 4 shows the same letters X and K with the brightest (W) and bright (G) cells horizontally aligned in the top row of pixels and with the medium (R) and darkest (B) cells horizontally aligned in the second row of pixels. Accordingly, the FIGURE 4 illustration could include the cell arrangement shown in either FIGURE 2c or FIGURE 2d. The alpha-numeric characters shown in FIGURE 4 have uniform diagonals sloping in both directions and also straight vertical and horizontal lines and, thus, are more pleasant to the eye and easier to read than the characters of FIGURE 3. The same pleasing appearance is achieved when the arrangements of FIGURES 2a and 2b are used with the brightest and bright cells in the second horizontal row of pixels.

FIGURE 5 shows the appearance of the same letters X and K when the cell arrangements shown in FIGURES 2g and 2h are used. The vertical alignment of the brightest and bright cells results in straight and pleasing vertical lines. Additionally, the upwardly sloping diagonals have the same appearance as the downwardly sloping diagonals, resulting in a pleasing appearance and easily read characters. The pleasing, easily read appearance of the characters in FIGURE 5 is also realized with the cell arrangements shown in FIGURE 2e and 2f, the only difference being that the bright portions of the characters lie on the right of each stroke, rather than on the left as they do in FIGURE 5.

The cell arrangements illustrated in FIGURE 1 and FIGURES 2a through 2h are particularly advantageous when alpha-numeric and graphic displays are to be produced utilizing bilevel devices. With bilevel devices, the individual cells are either on or off and no attempt is made to obtain gray scale gradations. Accordingly, the R, B, G, W cells used with the invention typically are intended to be bilevel devices, and preferably are liquid crystal cells. The construction of liquid crystal cells, and the manner of attaining colors from such cells, are well known to those skilled in the art.

## Claims

1. A display device having an array of multi-cell pixels arranged along horizontal and vertical axes, characterized by an arrangement for the cells comprised in said pixels (11), for producing straight vertical and horizontal alpha-numeric lines and for producing upwardly and downwardly sloping alpha-numeric lines having the same overall appearance, wherein each of said pixels includes a brightest cell (W), a bright cell (G), a medium cell (R) and a darkest cell (B), said brightest cell and said bright cell being aligned substantially parallel to one of said axes, and said bright cell and said darkest cell being diagonally aligned with respect to said axes.

2. The device of claim 1, characterized in that said brightest cell (W) is white, said bright cell (G) is green, said medium cell (R) is red, and said darkest cell (B) is blue.

3. The device of claim 2, characterized in that said cells are bilevel devices.

4. The device of claim 3, characterized in that said bilevel devices are liquid crystals.

## Patentansprüche

1. Darstellungseinrichtung mit einem Muster mehrzelliger Bildelemente, die entlang horizontalen und vertikalen Achsen angeordnet sind, **dadurch gekennzeichnet,** daß die Zellen der Bildelemente (11) derart angeordnet sind, daß gerade vertikale und horizontale alphanumerische Linien entstehen und aufwärts und abwärts geneigte alphanumerische Linien dasselbe Gesamtaussehen haben, wobei jedes der Bildelemente eine hellste Zelle (W), eine helle Zelle (G), eine mittlere Zelle (R) und eine dunkelste Zelle (B) enthält und die hellste Zelle und die helle Zelle im wesentlichen parallel mit einer der Achsen ausgerichtet sind und die helle Zelle und die dunkelste Zelle diagonal zu den Achsen ausgerichtet sind.

2. Einrichtung nach Anspruch 1, **dadurch gekennzeichnet,** daß die hellste Zelle (W) weiß, die helle Zelle (G) grün, die mittlere Zelle (R) rot und die dunkelste Zelle (B) blau ist.

3. Einrichtung nach Anspruch 2, **dadurch gekennzeichnet,** daß die Zellen Zweipegelelemente sind.

4. Einrichtung nach Anspruch 3, **dadurch gekennzeichnet,** daß die Zweipegelelemente durch Flüssigkristalle gebildet werden.

## Revendications

1. Dispositif d'affichage comprenant un arrangement de pixels multi-cellules disposés le long d'axes horizontaux et verticaux caractérisé par une disposition des cellules comprises dans lesdits pixels (11), pour produire des lignes droites alpha-numériques verticales et horizontales et pour produire des lignes alpha-numériques en pente vers le haut et vers le bas ayant le même aspect d'ensemble, dans lequel chacun desdits pixels comprend une cellule plus brillante (W), une cellule brillante (G), une cellule moyenne (R) et une cellule plus sombre (B), ladite cellule plus brillante et ladite cellule brillante étant alignées sensiblement parallèlement à l'un desdits axes, et ladite cellule brillante et ladite cellule sombre étant alignées en diagonale par rapport auxdits axes.

2. Dispositif selon la revendication 1 caractérisé en ce que ladite cellule plus brillante (W) est blanche, ladite cellule brillante (G) est verte, ladite cellule moyenne (R) est rouge et ladite cellule sombre (B) est bleue.

3. Dispositif selon la revendication 2 caractérisé en ce que lesdites cellules sont des dispositifs à deux niveaux.

4. Dispositif selon la revendication 3 caractérisé en ce que les dispositifs à deux niveaux sont des cristaux liquides.
